# EUROPEAN PATENT APPLICATION

(11) **EP 4 651 575 A1**
(43) Date of publication of application: **19.11.2025**
(21) Application number: 24750453.3
(22) Date of filing: 15.01.2024
(51) Int. Cl.: H04W 52/02, H04W 8/24, H04W 76/28, H04W 24/08

(54) **METHOD AND APPARATUS FOR TRANSMITTING AND RECEIVING WAKE-UP SIGNAL IN WIRELESS COMMUNICATION SYSTEM**

(30) Priority: 30.01.2023 KR 20230011847
(71) Applicant: Samsung Electronics Co., Ltd., Suwon-si, Gyeonggi-do 16677 (KR)
(72) Inventor: KIM, Sangbum, Suwon-si Gyeonggi-do 16677 (KR); AGIWAL, Anil, Suwon-si Gyeonggi-do 16677 (KR)
(74) Representative: Nederlandsch Octrooibureau
(86) International application number: PCT/KR2024/000715
(87) International publication number: WO 2024/162651

(57) **Abstract**

The present disclosure relates to a 5G or 6G communication system for supporting a higher data transmission rate. A method performed by a UE in a wireless communication system, according to the present disclosure, may comprise the steps of: reporting capability information thereof to a base station; receiving Cell DTX pattern information from the base station; receiving an RRCReconfiguration message from the base station; acquiring DCP configuration information included in the RRCReconfiguration message; on the basis of a Cell DTX pattern and the DCP configuration information, determining whether or not to monitor a DCP or a PDCCH; and monitoring the DCP or the PDCCH on the basis of whether or not to monitor.

## Description

### [Technical Field]

The disclosure relates to a wireless communication system or a mobile communication system. Specifically, the disclosure relates to an apparatus and a method in which a terminal and a base station support a WUS in a wireless communication system.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mm Wave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure proposes an apparatus and a method in which a terminal and a base station support a wake-up signal (WUS) in a wireless communication system or a mobile communication system. The technical subjects pursued in the disclosure may not be limited to the above-mentioned technical subjects, and other technical subjects which are not mentioned may be clearly understood from the following descriptions by those skilled in the art to which the disclosure pertains.

### [Solution to Problem]

A method performed by a terminal in a wireless communication system of the disclosure may include reporting capability information of the terminal to a base station, receiving cell DTX pattern information from the base station, receiving an RRCReconfiguration message from the base station and acquiring DCP configuration information included in the RRCReconfiguration message, determining whether a DCP or PDCCH can be monitored, based on a cell DTX pattern and the DCP configuration information, and monitoring the DCP or PDCCH, based on whether the DCP or PDCCH can be monitored.

### [Advantageous Effects of Invention]

According to embodiments proposed in the disclosure, a base station can provide a terminal with scheduling information about the terminal according to a pattern.

According to the embodiments proposed in the disclosure, DRX can prevent continuous monitoring of a PDCCH. Accordingly, the power consumption of the terminal can be reduced.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 illustrates a structure of a wireless communication system according to various embodiments of the disclosure.
FIG. 2 illustrates a radio access state transition in a wireless communication system according to various embodiments of the disclosure;
FIG. 3 illustrates cell DTX/DRX for reducing power consumption of a base station according to various embodiments of the disclosure;
FIG. 4 illustrates a DCP for saving power consumption of a connected mode UE according to various embodiments of the disclosure;
FIG. 5 illustrates an operation in which a connected mode UE configures a DCP to save power consumption according to various embodiments of the disclosure;
FIG. 6 illustrates a case in which a UE is unable to monitor a DCP or PDCCH due to cell DTX according to various embodiments of the disclosure;
FIG. 7 illustrates a first DCP operation of a UE considering cell DTX according to various embodiments of the disclosure;
FIG. 8 illustrates a second DCP operation of a UE considering cell DTX according to various embodiments of the disclosure;
FIG. 9 illustrates a third DCP operation of a UE considering cell DTX according to various embodiments of the disclosure;
FIG. 10 illustrates a fourth DCP operation of a UE considering cell DTX according to various embodiments of the disclosure;
FIG. 11 illustrates a fifth DCP operation of a UE considering cell DTX according to various embodiments of the disclosure;
FIG. 12 illustrates the operation of a UE according to various embodiments of the disclosure; and
FIG. 13 illustrates the operation of a base station according to various embodiments of the disclosure.
FIG. 14 is a block diagram illustrating an internal structure of a UE according to various embodiments of the disclosure.
FIG. 15 is a block diagram illustrating a configuration of a base station according to various embodiments of the disclosure.
FIG. 16 illustrates a structure of a base station according to various embodiments of the disclosure.
FIG. 17 illustrates a structure of a UE according to various embodiments of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

In describing the embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

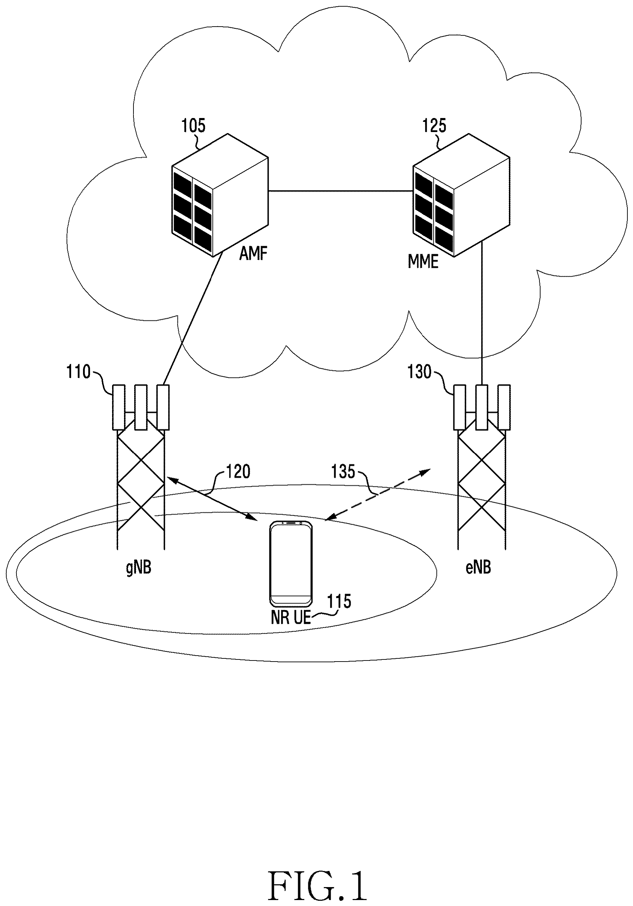

FIG. 1 illustrates a structure of a wireless communication system according to various embodiments of the disclosure.

Referring to FIG. 1c, as illustrated therein, a radio access network of a next-generation mobile communication system (new radio, NR) may include a next-generation base station (new radio node B, hereinafter gNB ) 110, and an AMF 105 within a new radio core network. A user terminal (new radio user equipment, hereinafter NR UE or NR terminal) 115 may access an external network via the gNB 110 and the AMF 105.

In FIG. 1, the gNB may correspond to an evolved node B (eNB) of a conventional LTE system. The gNB may be connected to the NR UE through a radio channel and provide outstanding services as compared to a conventional node B (120). In the next-generation mobile communication system, since all user traffic is serviced through a shared channel, a device that collects state information, such as buffer statuses, available transmit power states, and channel states of UEs, and performs scheduling accordingly s required, and the gNB 110 may serve as the device. In general, one gNB may control multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE. The AMF 105 may perform functions such as mobility support, bearer configuration, and QoS configuration. The AMF 105 is a device responsible for various control functions as well as a mobility management function for a UE, and may be connected to multiple base stations. In addition, the next-generation mobile communication system may interwork with the existing LTE system, and the AMF 105 may be connected to an MME 125 via a network interface. The MME 125 may be connected to an eNB 130 that is an existing base station. A UE supporting LTE-NR dual connectivity may transmit/receive data while maintaining connections to both the gNB and the eNB (135).

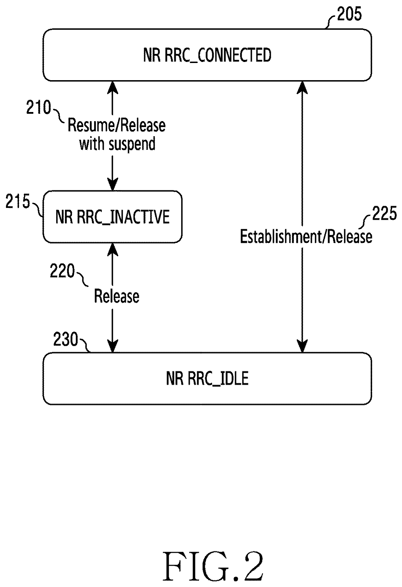

FIG. 2 illustrates a radio access state transition in a wireless communication system according various embodiments of the disclosure.

The wireless communication system may have three types of radio access states (RRC states). A connected mode (RRC_CONNECTED) 205 is a radio access state in which a UE is able to transmit or receive data. An idle mode (RRC_IDLE) 230 is a radio access state in which a UE monitors whether paging is transmitted to the UE. The connected mode 205 and the idle mode 230 are radio access states that are also applied to an existing LTE system, and detailed technologies are the same as those of the existing LTE system. In the next generation mobile communication system, an inactive radio access state mode (RRC_INACTIVE) 215 is newly defined. In the inactive radio access state mode 215, UE context is maintained in a base station and a UE, and RAN-based paging may be supported. The features of the inactive radio access state mode 215 described in the disclosure include, but are not limited to, the following.
Cell re-selection mobility;
CN-NR RAN connection (both C/U-planes) has been established for UE;
The UE AS context is stored in at least one of gNB and the UE;
Paging is initiated by NR RAN;
RAN-based notification area is managed by NR RAN;
NR RAN knows the RAN-based notification area which the UE belongs to;

The new inactive radio access state mode 215 may transition to the connected mode 205 or the idle mode 230 by using a specific procedure. The inactive radio access state mode 215 is switched to the connected mode 205 according to a resume process, and the connected mode 205 is switched to the inactive radio access state mode 215 by using a release procedure including suspend configuration information (indicated by reference numeral 210). In above procedure, one or more RRC messages are transmitted or received between a UE and a base station, and one or more operations are included in the procedure. In addition, through the release procedure after the resume process, the inactive radio access state mode 215 may be switched to the idle mode 230 (indicated by reference numeral 220). The switching between the connected mode 205 and the idle mode 230 may follow the existing LTE technology. That is, the switching between the connected mode 205 and the idle mode 230 may be performed through an establishment or release procedure (indicated by reference numeral 225).

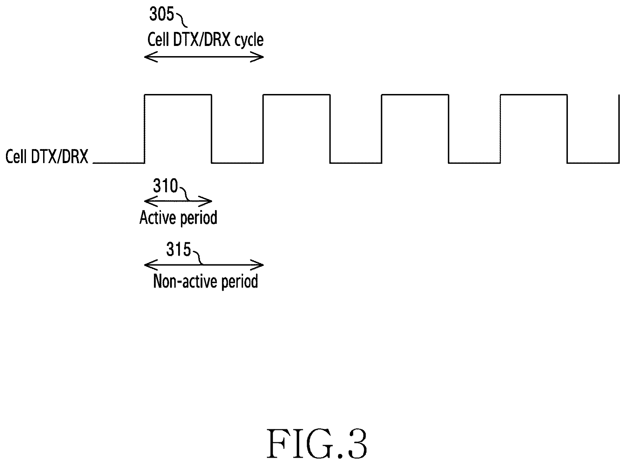

FIG. 3 illustrates cell DTX/DRX for reducing power consumption of a base station according to various embodiments of the disclosure.

In a wireless communication system or mobile communication system, a base station should provide services to a large number of UEs within its service area, so power consumption is not small. Therefore, technologies for reducing the power consumption of the base station are being discussed. For example, the following candidate technologies are being proposed in the NR standard. However, they are not limited thereto.
- Cell DTX/DRX
- NES-aware CHO
- SSB-less/SIB-less Cell
- Cell (Re)Selection enhancement
- UE WUS (Wake-up signal)
- UE Assistance Information for NES

Among these technologies, cell DTX/DRX is a technology that periodically turns on or off data transmission and reception. Cell DTX is a technology in which the base station turns on/off data transmission in the downlink, and cell DRX is a technology in which the base station turns on/off data reception in the uplink. During the time period when the base station turns off data transmission and reception, the power consumption of the base station may be significantly reduced.

When cell DTX or cell DRX is started, the base station may, for each cell DTX or cell DRX cycle 305 consisting of an active period 310 and a non-active period 315, perform a predetermined operation corresponding to the period. During the active period, the base station may perform normal operations for providing services to existing UEs. During the non-active period, data transmission and reception are usually turned off, and the following options for base station operations are specifically being considered.
- First option: gNB is expected to turn off all transmission and reception for data traffic and reference signal during cell DTX/DRX non-active periods.
- Second option: gNB is expected to turn off its transmission/reception only for data traffic during cell DTX/DRX non-active periods (i.e., gNB will still transmit/receive reference signals).
- Third option: gNB is expected to turn off its dynamic data transmission/reception during cell DTX/DRX non-active periods (i.e., gNB is expected to still perform transmission/reception in periodic resources, including SPS, CG-PUSCH, SR, RACH, and SRS).
- Fourth option: gNB is expected to only transmit reference signals (e.g., CSI-RS for measurement).

In the above first and fourth options, the base station does not broadcast SSB, which is a common reference signal.

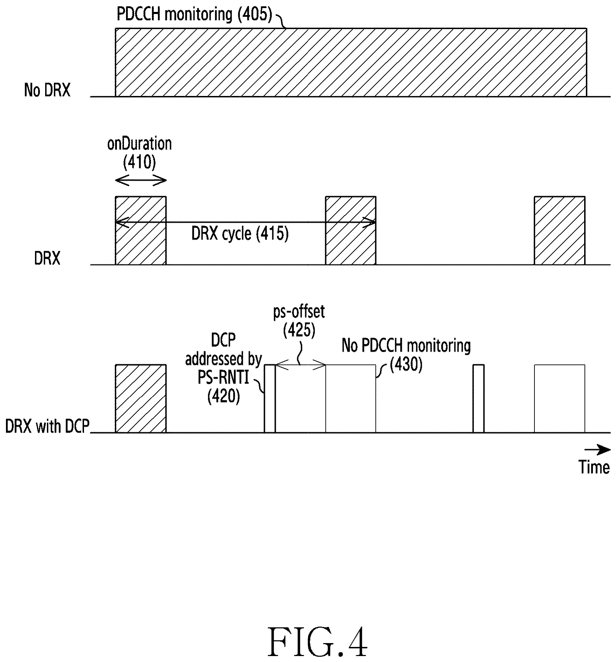

FIG. 4 illustrates a DCP for saving power consumption of a connected mode UE according to various embodiments of the disclosure.

In the connected mode, a UE may monitor a PDCCH including scheduling information (indicated by reference numeral 405). When the UE receives its own scheduling information from the base station, the UE may transmit or receive its own transmission/reception data through a radio resource indicated by the scheduling information. Since the PDCCH monitoring operation 405 of the UE consumes UE power, discontinuous reception (DRX) technology has been introduced in a wireless communication system or a mobile communication system to minimize this UE power consumption. When DRX is configured, the UE may perform the PDCCH monitoring operation during an onDuration time period 410 for each DRX cycle 415. The base station may provide scheduling information about the UE according to a pattern. DRX has the effect of reducing UE power consumption by preventing continuous monitoring of the PDCCH.

In the next generation mobile communication system, a DCP (DCI with CRC scrambled by PS-RNTI) is introduced to reduce UE power consumption more effectively. A DCP is also called a wake-up signal (WUS). The base station may transmit a DCP signal before a predetermined offset period 425 prior to a PDCCH occasion 430 (indicated by reference numeral 420). The DCP may store information indicating whether to perform a PDCCH monitoring operation in an upcoming PDCCH occasion. If there is no scheduling information to be stored in the upcoming PDCCH occasion, the base station will store, in the DCP, an indicator indicating that the PDCCH monitoring operation is not required in the upcoming PDCCH occasion. Accordingly, the connected mode UE may skip the PDCCH monitoring operation according to the information included in the DCP. In other words, the UE does not run a drx-onDurationTimer at this time.

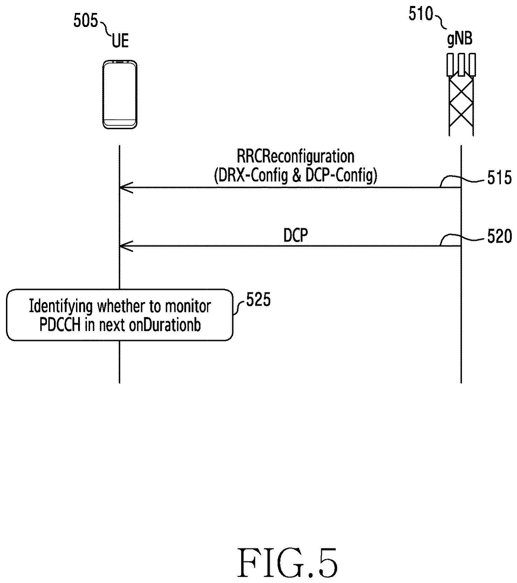

FIG. 5 illustrates an operation in which a connected mode UE configures a DCP to save power consumption according to various embodiments of the disclosure.

A connected mode UE 505 may receive DCP configuration information (DCP-Config IE) together with DRX configuration information from a base station 510 (indicated by reference numeral 515). The UE receives a DCP from the base station (indicated by reference numeral 520) and, based on the information contained in the DCP, the UE may determine whether to perform a PDCCH monitoring operation in a PDCCH occasion that arrives after the DCP (indicated by reference numeral 525).

DCP-Config IE may include parameters as shown in the table below, but is not limited thereto.

**[Table 1]**

| Fields configured by RRC | Description |
|---|---|
| ps-RNTI | RNTI value for scrambling CRC of DCP |
| ps-Offset | Time offset between DCP and onDuration |
| sizeDCI-2-6 | Size of DCI format 2-6 |
| ps-PositionDCI-2-6 | Starting position of UE wakeup and SCell dormancy indication in DCI format 2-6 |
| ps-WakeUp | Indicates the UE to wake-up if DCP is not detected outside active time |
| ps- TransmitPeriodicL 1-RSRP | Indicates the UE to transmit periodic L1-RSRP report(s) when the drx-onDurationTimer does not start |
| ps-TransmitOtherPeriodicCSI | Indicates the UE to transmit periodic CSI report(s) other than L1-RSRP reports when the drx-onDurationTimer does not start |

The ps-RNTI value is an RNTI value that indicates a DCP. The ps-Offset is a time offset value between a DCP and an onDuration. The sizeDCI-2-6 is the size information of the DCI format including a DCP, and the ps-PositionDCI-2-6 is the position information of DCP information in the DCI format 2-6. The ps-WakeUp is an indicator indicating whether to monitor a PDCCH in onDuration when the UE fails to receive the DCP. The ps-TransmitPeriodicL1-RSRP and ps-TransmitOtherPeriodicCSI are indicators indicating whether to transmit an L1-RSRP report and a periodic CSI report when the UE does not start the drx-onDurationTimer.

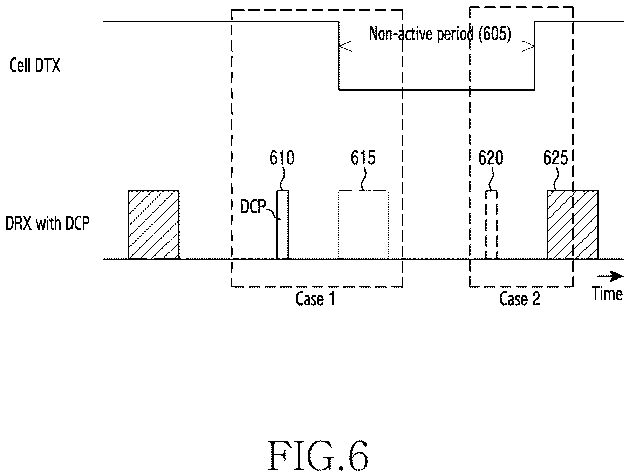

FIG. 6 illustrates a case in which a UE is unable to monitor a DCP or PDCCH due to cell DTX according to various embodiments of the disclosure.

When cell DTX is applied, cell DTX cycle is divided into an active period and a non-active period, and no downlink data signal is transmitted during a non-active period 605. A DCP may be configured for a specific UE. Here, although a DCP 610 is transmitted, an onDuration 615 corresponding to the DCP may overlap the non-active period of cell DTX. Alternatively, a DCP occasion 620 may overlap the non-active period of cell DTX, and an onDuration 625 corresponding to the DCP may not overlap the non-active period.

In a carrier aggregation/dual connectivity (CA/DC) scenario, the DCP is transmitted only in SpCell (PCell or PSCell), and cell DTX may be configured for each serving cell. Therefore, the DCP is transmitted, and the onDuration corresponding to the DCP only in a specific cell may overlap the non-active period of cell DTX. Alternatively, a DCP occasion may overlap the non-active period of cell DTX, and the onDuration corresponding to the DCP only in a specific cell may not overlap the non-active period.

The operations proposed in these embodiments may be applied simultaneously.

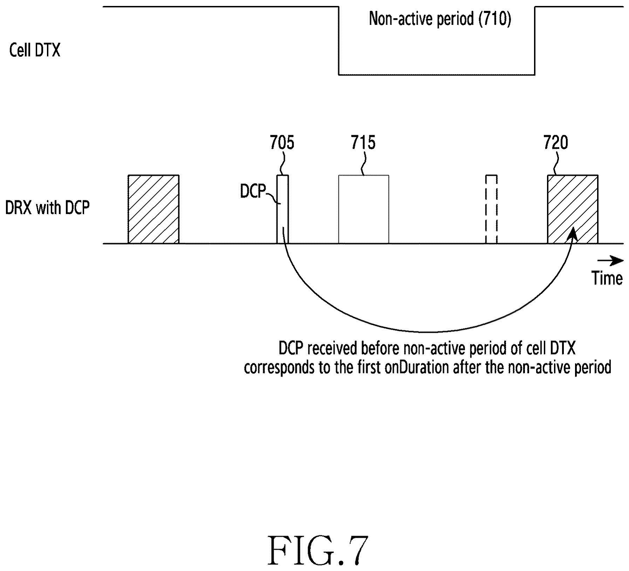

FIG. 7 illustrates a first DCP operation of a UE considering cell DTX according to various embodiments of the disclosure.

Although a DCP 705 is transmitted, an on-duration 715 corresponding to the DCP may overlap a non-active period 710 of cell DTX. Here, the information stored in the DCP may be applied to an onDuration 720 that arrives after the non-active period 710 ends. When the non-active period ends and a DCP occasion other than onDuration arrives, the DCP received before the non-active period may be ignored. Since the UE knows cell DTX pattern information in advance, when the non-active period ends and the DCP occasion arrives, if the DCP occasion is located before the non-active period and the corresponding onDuration overlaps the non-active period, the UE may skip the operation of receiving the corresponding DCP.

In a CA/DC scenario, the DCP is transmitted, and the on-duration corresponding to the DCP only in a specific cell may overlap the non-active period of cell DTX. Therefore, in a serving cell where the DCP is transmitted and the on-duration corresponding to the DCP overlaps the non-active period 710 of cell DTX, the information contained in the DCP may be applied to the onDuration arriving after the non-active period ends or may be ignored. On the other hand, in a serving cell where the on-duration corresponding to the DCP does not overlap the non-active period of cell DTX, the information contained in the DCP may be applied, as before, to the onDuration arriving after the ps-Offset.

As another example, in a CA/DC scenario, when the DCP is transmitted and the on-duration corresponding to the DCP in a SpCell cell overlaps the non-active period of cell DTX, the information contained in the DCP in all serving cells may be applied to the onDuration that arrives after the non-active period of the SpCell ends.

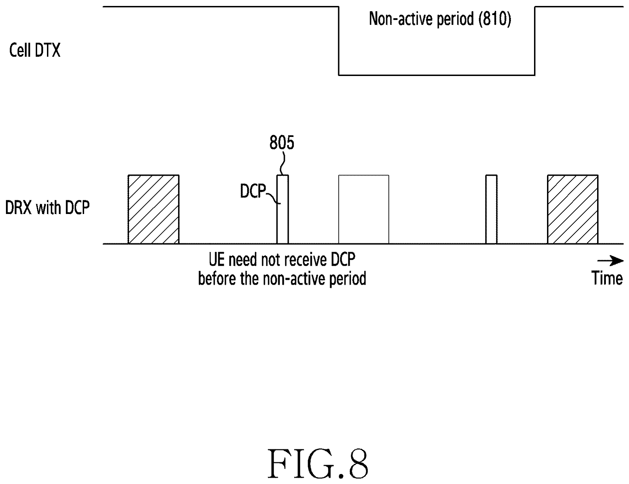

FIG. 8 illustrates a second DCP operation of a UE considering cell DTX according to various embodiments of the disclosure.

If the onDuration of all serving cells corresponding to a DCP 805 overlaps a non-active period 810 of cell DTX, the base station may not transmit the DCP, and the UE may not need to monitor the DCP in a DCP occasion, or may ignore the information of the DCP even if the DCP is received. In other words, when the onDuration of at least one serving cell does not overlap the non-active period of cell DTX, the base station transmits the DCP corresponding to the onDuration for the serving cell, and the UE may also monitor the DCP.

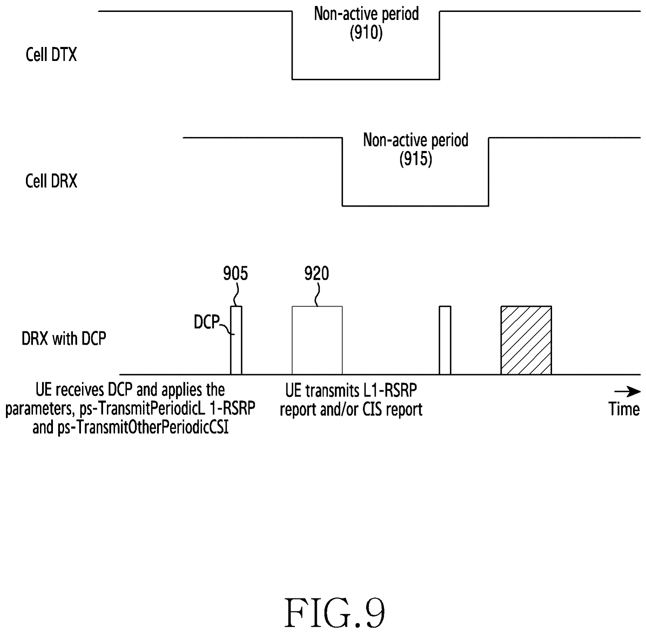

FIG. 9 illustrates a third DCP operation of a UE considering cell DTX according to various embodiments of the disclosure.

A non-active period 910 of cell DTX need not coincide with a non-active period 915 of cell DRX. Therefore, cell DRX may be in an active period during the non-active period of cell DTX. A DCP 905 is used not only to indicate whether a PDCCH should be monitored in a corresponding onDuration 920, but also to indicate whether to transmit an L1-RSRP or CSI report via uplink when the drx-onDurationTimer is not running. Therefore, even if the onDuration of all serving cells overlaps the non-active period of cell DTX, the DSP may still be used to indicate whether to transmit the L1-RSRP or CSI report. In case that the onDuration corresponding to the DCP overlaps the active period of cell DRX of at least one serving cell and the base station needs to determine whether to transmit the L1-RSRP or CSI report (for example, when there is no need to monitor the PDCCH in the onDuration corresponding to the DCP in a predetermined serving cell), the base station transmits the DCP corresponding to the onDuration and the UE may also monitor the DCP. Alternatively, in case that the onDuration corresponding to the DCP overlaps the active period of cell DRX of at least SpCell and the base station needs to indicate whether to transmit the L1-RSRP or CSI report, the base station transmits the DCP corresponding to the onDuration and the UE may also monitor the DCP.

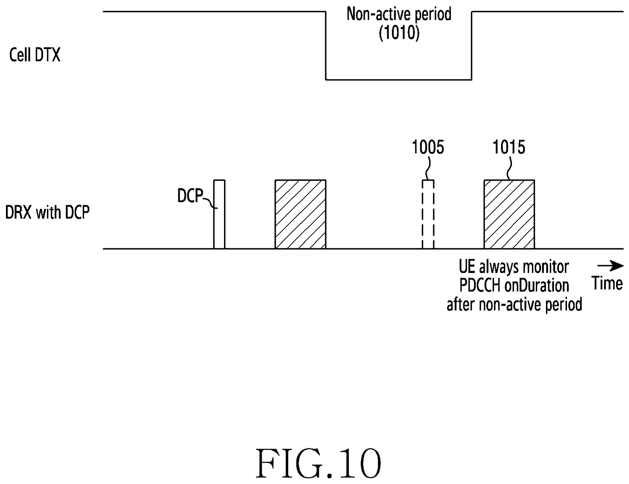

FIG. 10 illustrates a fourth DCP operation of a UE considering cell DTX according to various embodiments of the disclosure.

A non-active period 1010 of DTX of SpCell transmitting a DCP overlaps a DCP occasion 1005. Therefore, the base station is unable to transmit the DCP in the DCP occasion. An onDuration 1015 corresponding to the DCP transmitted in the DCP occasion in at least one serving cell belonging to the same cell group as the SpCell does not overlap the non-active period. Here, the UE may always monitor a PDCCH in the onDuration. In addition, the UE may transmit the L1-RSRP and CSI reports.

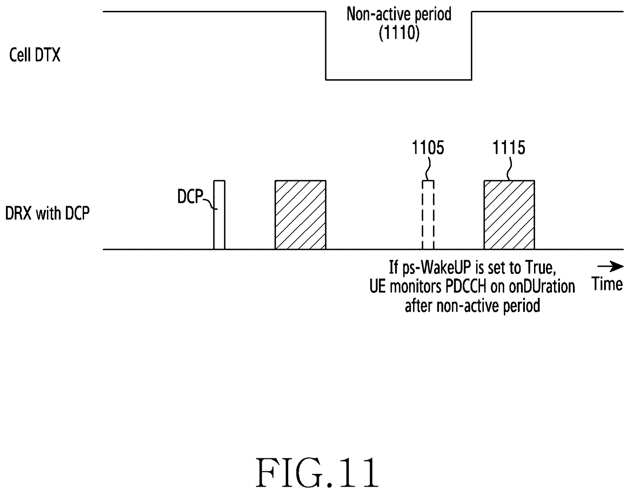

FIG. 11 illustrates a fifth DCP operation of a UE considering cell DTX according to various embodiments of the disclosure.

A non-active period 1110 of DTX of SpCell transmitting a DCP may overlap a DCP occasion 1105. Therefore, a base station is unable to transmit the DCP in the DCP occasion. An onDuration 1115 corresponding to the DCP transmitted in the DCP occasion in at least one serving cell belonging to the same cell group as SpCell does not overlap the non-active period. Here, the UE determines whether to monitor a PDCCH in the onDuration according to a configuration value of ps-WakeUp. When the ps-WakeUp is configured as "true", the PDCCH is monitored in the onDuration, and otherwise, the PDCCH is not monitored.

A new indicator indicating whether to monitor the PDCCH in the onDuration may be included in the DCP. The UE determines whether to monitor the PDCCH in the onDuration according to a configuration value of the new indicator. If the value of the new indicator is configured as "true", the PDCCH is monitored in the onDuration, otherwise the PDCCH is not monitored.

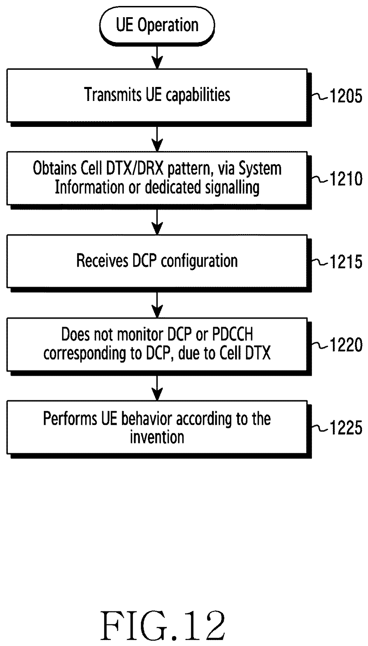

FIG. 12 illustrates the operation of a UE according to various embodiments of the disclosure.

In operation 1205, the UE may report its capability information to a base station. The capability information of the UE may include indicators indicating whether the UE supports a DCP and cell DTX/DRX.

In operation 1210, the UE may be provided with cell DTX or DRX pattern information from the base station. The UE may receive the cell DTX or DRX pattern information from the base station via system information or dedicated signaling.

In operation 1215, the UE may receive DCP configuration information through an RRCReconfiguration message transmitted from the base station.

In operation 1220, since a non-active period of cell DTX applied to SpCell overlaps a configured DCP occasion, the UE is unable to receive the DCP in the DCP occasion, or since the DCP has been received but the non-active period of cell DTX applied to all or some serving cells overlaps an onDuration corresponding to the received DCP, the UE is unable to monitor the PDCCH.

In operation 1225, the UE may operate according to the methods proposed in the embodiments. For example, when the non-active period of cell DTX applied to the SpCell overlaps the configured DCP occasion, and thus the UE is unable to receive the DCP in the DCP occasion, the UE may always monitor a PDCCH in the onDuration corresponding to the DCP (which does not overlap the non-active period of cell DTX), or may determine whether to monitor the PDCCH in the onDuration (which does not overlap the non-active period of cell DTX) according to the ps-WakeUp configuration value included in the DCP configuration information.

When the UE has configured a DCP and successfully receives the DCP, if there is an onDuration that does not overlap the non-active period of cell DTX in at least one serving cell, the UE may determine whether to monitor the PDCCH in the onDuration of the serving cell according to the information indicated by the DCP.

When the UE has configured a DCP and successfully receives the DCP, if there is an onDuration that does not overlap the non-active period of cell DRX in at least one serving cell, the UE may determine whether to transmit the L1-RSRP or CSI report in the onDuration of the serving cell according to the information indicated by the DCP.

When the UE has configured a DCP and successfully receives the DCP from SpCell, if there is an onDuration that does not overlap the non-active period of cell DTX in at least one serving cell(s) belonging to the same cell group as SpCell, the UE may determine whether to monitor the PDCCH in the onDuration of the serving cell(s) according to the information indicated by the DCP.

When the UE has configured a DCP and successfully receives the DCP from SpCell, if there is an onDuration that does not overlap the non-active period of cell DRX in at least one serving cell(s) belonging to the same cell group as SpCell, the UE may determine whether to transmit the L1-RSRP report or CSI report in the onDuration of the serving cell(s) according to the information indicated by the DCP.

When the UE has configured a DCP and successfully receives the DCP from SpCell, if the non-active period of cell DTX or cell DRX overlaps the onDuration in all serving cell(s) belonging to the same cell group as SpCell, the UE may skip the operation of receiving the DCP or ignore the information of the received DCP. Since the UE knows the preconfigured pattern information of cell DTX or cell DRX in advance, the UE may determine in advance whether the non-active period of cell DTX or cell DRX and the onDuration overlap.

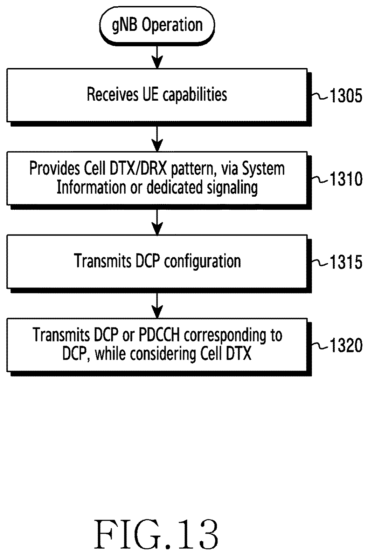

FIG. 13 illustrates the operation of a base station according to various embodiments of the disclosure.

In operation 1305, the base station may receive capability information from a UE. The capability information may include indicators indicating whether the UE supports a DCP and cell DTX/DRX.

In operation 1310, the base station may provide cell DTX or cell DRX pattern information to the UE by using system information or dedicated signaling.

In operation 1315, the base station may provide DCP configuration information to the UE.

In operation 1320, the base station may operate according to the methods proposed in the embodiments.

For example, if the non-active period of cell DTX or cell DRX overlaps the onDuration in all serving cell(s) belonging to the same cell group as SpCell, the base station does not need to transmit the DCP corresponding to the onDuration.

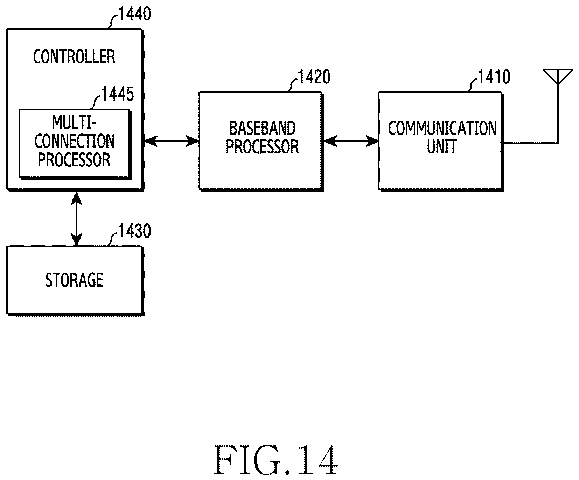

FIG. 14 is a block diagram illustrating an internal structure of a UE according to various embodiments of the disclosure.

Referring to FIG. 1P, the UE may include a radio frequency (RF) processor 1410, a baseband processor 1420, a storage 1430, and a controller 1440.

The RF processor 1410 may perform a function for transmitting and receiving a signal via a wireless channel, such as band conversion and amplification of the signal. That is, the RF processor 1410 may up-convert a baseband signal provided from the baseband processor 1420 to an RF band signal, may transmit the same through an antenna, and may down-convert an RF band signal received through the antenna to a baseband signal. For example, the RF processor 1410 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 1410 may include multiple RF chains. Furthermore, the RF processor 1410 may perform beamforming. For the beamforming, the RF processor 1410 may adjust the phase and magnitude of each of signals transmitted and received through multiple antennas or antenna elements. In addition, the RF processor 1410 may perform MIMO, and may receive multiple layers when performing MIMO operations.

The baseband processor 1420 may perform functions of conversion between baseband signals and bitstrings according to the system's physical layer specifications. For example, in case of data transmission, the baseband processor 1420 may encode and modulate a transmitted bitstring to generate complex symbols. In addition, in case of data reception, the baseband processor 1420 may restore the received bit stream through demodulation and decoding of the baseband signal provided from the RF processor 1410. For example, when following the orthogonal frequency division multiplexing (OFDM) scheme, during data transmission, the baseband processor 1420 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, in case of data reception, the baseband processor 1420 may split a baseband signal provided from the RF processor 1410 at the OFDM symbol level, may restore signals mapped to subcarriers through a fast Fourier transform (FFT) operation, and may restore a received bitstring through demodulation and decoding.

The baseband processor 1420 and the RF processor 1410 may transmit and receive signals as described above. Therefore, the baseband processor 1420 and the RF processor 1410 may be referred to as a transmitter, a receiver, a transceiver, or a communication unit. Furthermore, at least one of the baseband processor 1420 and the RF processor 1410 may include multiple communication modules to support multiple different radio access technologies. In addition, at least one of the baseband processor 1420 and the RF processor 1410 may include different communication modules to process signals in different frequency bands. For example, the different radio access technologies may include wireless LANs (for e.g., IEEE 802.11), cellular networks (e.g., LTE), and the like. In addition, the different frequency bands may include super high frequency (SHF) (e.g., 2 NRHz) bands and millimeter wave (mmWave) (e.g., 60GHz) bands.

The storage 1430 stores data such as basic programs, application programs, and configuration information for operations of the UE. In particular, the storage 1430 may store information related to the second access node, which performs wireless communication using the second wireless access technology. In addition, the storage 1430 provides the stored data at the request of the controller 1440.

The controller 1440 controls the overall operation of the UE. For example, the controller 1440 may transmit/receive signals through the baseband processor 1420 and the RF processor 1410. In addition, the controller 1440 records data in the storage 1430 and reads the data from the storage 1430. To this end, the controller 1440 may include at least one processor. For example, the controller 1440 may include a communication processor (CP) configured to perform control for communication, and an application processor (AP) configured to control upper layers such as application programs.

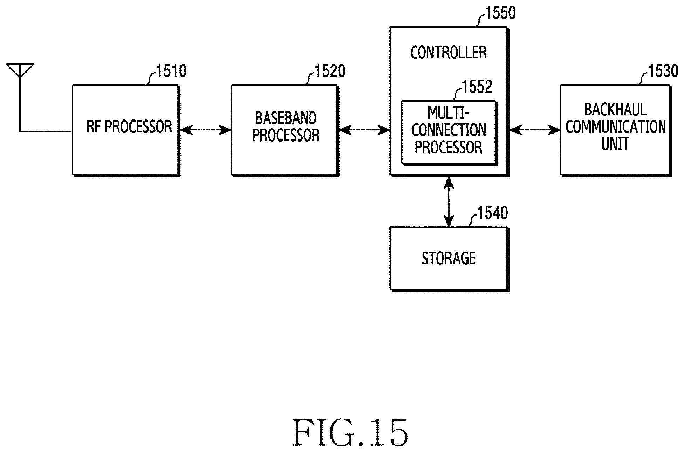

FIG. 15 is a block diagram illustrating a configuration of a base station according to various embodiments of the disclosure.

Referring to FIG. 15, the base station may include an RF processor 1510, a baseband processor 1520, a backhaul communication unit 1530, a storage 1540, and a controller 1550.

The RF processor 1510 may perform a function for transmitting and receiving a signal via a wireless channel, such as band conversion and amplification of the signal. That is, the RF processor 1510 may up-convert a baseband signal provided from the baseband processor 1520 to an RF band signal, may transmit the same through an antenna, and may down-convert an RF band signal received through the antenna to a baseband signal. For example, the RF processor 1510 may include a transmission filter, a reception filter, an amplifier, a mixer, an oscillator, a DAC, and an ADC. Although only one antenna is illustrated in the drawing, the first access node may include multiple antennas. In addition, the RF processor 1510 may include multiple RF chains. Furthermore, the RF processor 1510 may perform beamforming. For the beamforming, the RF processor 1510 may adjust the phase and magnitude of each of signals transmitted and received through multiple antennas or antenna elements. The RF processor 1510 may transmit one or more layers to perform a downward MIMO operation.

The baseband processor 1520 may perform functions of conversion between baseband signals and bitstrings according to the physical layer specifications of a first radio access technology. For example, in case of data transmission, the baseband processor 1520 may encode and modulate a transmitted bitstring to generate complex symbols. In addition, in case of data reception, the baseband processor 1520 may demodulate and decode a baseband signal provided from the RF processor 1510 to restore a received bitstring. For example, when following the OFDM scheme, during data transmission, the baseband processor 1520 may encode and modulate a transmitted bitstring to generate complex symbols, may map the complex symbols to subcarriers, and may configure OFDM symbols through IFFT operation and CP insertion. In addition, in case of data reception, the baseband processor 1520 may split a baseband signal provided from the RF processor 1510 at the OFDM symbol level, may restore signals mapped to subcarriers through FFT operation, and may restore a received bitstring through demodulation and decoding. The baseband processor 1520 and the RF processor 1510 may transmit and receive signals as described above. Therefore, the baseband processor 1520 and the RF processor 1510 may be referred to as a transmitter, a receiver, a transceiver, a communication unit, or a wireless communication unit.

The backhaul communication unit 1530 provides an interface for performing communication with other nodes in the network. That is, the backhaul communication unit 1530 converts bitstrings transmitted from the main base station to other nodes, for example, an auxiliary base station, a core network, etc., into physical signals, and converts physical signals received from the other nodes into bitstrings.

The storage 1540 stores data such as basic programs, application programs, and configuration information for operations of the base station. In particular, the storage 1540 may store information on bearers allocated to the connected UE, measurement results reported from the connected UE, and the like. In addition, the storage 1540 may store information serving as a criterion for determining whether to provide or stop multiple connections to the UE. In addition, the storage 1540 provides the stored data at the request of the controller 1550.

The controller 1550 controls the overall operation of the base station. For example, the controller 1550 may transmit/receive signals through the baseband processor 1520 and the RF processor 1510 or through the backhaul communication unit 1530. In addition, the controller 1550 records data in the storage 1540 and reads the data from the storage 1540. To this end, the controller 1550 may include at least one processor.

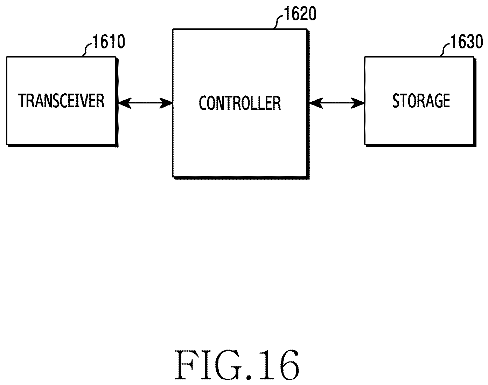

FIG. 16 illustrates a structure of a base station according to various embodiments of the disclosure.

Referring to FIG. 16, the base station may include a transceiver 1610, a controller 1620, and a storage 1630. The transceiver 1610, the controller 1620, and the storage 1630 may be operated according to the above-described communication methods of the base station. A network device may also correspond to the structure of the base station. However, components of the base station are not limited to the above-described example. For example, the base station may include a larger or smaller number of components than the above-described components. For example, the base station may include the transceiver 1610 and the controller 1620. Furthermore, the transceiver 1610, the controller 1620, and the storage 1630 may be implemented in the form of a single chip.

The transceiver 1610 refers to a base station receiver and a base station transmitter as a whole, and may transmit/receive signals with UEs, other base stations, and other network devices. The transmitted/received signals may include control information and data. The transceiver 1610 may transmit, for example, system information, synchronization signals, or reference signals to UEs. To this end, the transceiver 1610 may include an RF transmitter configured to up-convert and amplify the frequency of transmitted signals, an RF receiver configured to low-noise-amplify received signals and down-convert the frequency thereof, and the like. However, this is only an embodiment of the transceiver 1610, and the components of the transceiver 1610 are not limited to the RF transmitter and the RF receiver. The transceiver 1610 may include wired/wireless transceivers, and may include various components for transmitting/receiving signals. In addition, the transceiver 1610 may receive signals through a communication channel (e.g., a radio channel), output the same to the controller 1620, and transmit signals output from the controller 1620 through the communication channel. Furthermore, the transceiver 1610 may receive communication signals, output same to a processor, and transmit signals output from the processor to UEs, other base stations, or other network entities through a wired/wireless network.

The storage 1630 may store programs and data necessary for operations of the base station. In addition, the storage 1630 may store control information or data included in signals acquired by the base station. The storage 1630 may include storage media such as a ROM, a RAM, a hard disk, a CD-ROM, and a DVD, or a combination of storage media. In addition, the storage 1630 may store at least one of information transmitted/received through the transceiver 1610 and information generated through the controller 1620.

As used herein, the controller 1620 may be defined as a circuit, an application specific integrated circuit, or at least one processor. The processor may include a communication processor (CP) which performs control for communication and an application processor (AP) which controls upper layers such as application programs. The controller 1620 may control the overall operation of the base station according to the embodiments proposed in the disclosure. For example, the controller 1620 may control signal flows between the respective blocks to perform operations according to the above-described flowcharts.

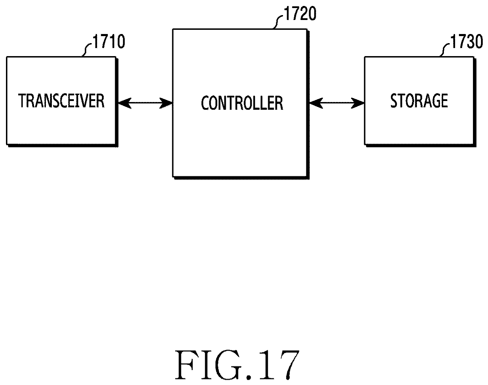

FIG. 17 illustrates a structure of a UE according to various embodiments of the disclosure.

Referring to FIG. 17, the UE may include a transceiver 1710, a controller 1720, and a storage 1730. The transceiver 1710, the controller 1720, and the storage 1730 may be operated according to the above-described communication methods of the UE. Components of the UE are not limited to the above-described example. For example, the UE may include a larger or smaller number of components than the above-described components. For example, the UE may include the transceiver 1710 and the controller 1720. Furthermore, the transceiver 1710, the controller 1720, and the storage 1730 may be implemented in the form of a single chip.

The transceiver 1710 refers to a UE receiver and a UE transmitter as a whole, and may transmit/receive signals with base stations, other UEs, and other network entities. The signals transmitted/received with the base station may include control information and data. The transceiver 1710 may receive, for example, system information, synchronization signals, or reference signals from the base station. To this end, the transceiver 1710 may include an RF transmitter configured to up-convert and amplify the frequency of transmitted signals, an RF receiver configured to low-noise-amplify received signals and down-convert the frequency thereof, and the like. However, this is only an embodiment of the transceiver 1710, and the components of the transceiver 1710 are not limited to the RF transmitter and the RF receiver. Also, the transceiver 1710 may include wired/wireless transceivers, and may include various components for transmitting/receiving signals. In addition, the transceiver 1710 may receive signals through a radio channel, output the same to the controller 1720, and transmit signals output from the controller 1720 through the radio channel. Furthermore, the transceiver 1710 may receive communication signals, output same to a processor, and transmit signals output from the processor to network entities through a wired/wireless network.

The storage 1730 may store programs and data necessary for operations of the UE. In addition, the storage may store control information or data included in a signal acquired by the UE. The storage 1730 may include storage media such as a ROM, a RAM, a hard disk, a CD-ROM, and a DVD, or a combination of storage media.

As used herein, the controller 1720 may be defined as a circuit, an application specific integrated circuit, or at least one processor. The processor may include a communication processor (CP) which performs control for communication and an application processor (AP) which controls upper layers such as application programs. The controller 1720 may control the overall operation of the UE according to the embodiments proposed in the disclosure. For example, the controller 1720 may control signal flows between the respective blocks to perform operations according to the above-described flowcharts.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a user equipment (UE) in a wireless communication system, the method comprising:
transmitting, to a base station, a first message including capability information of the UE;
receiving, from the base station, a second message including cell discontinuous transmission (DTX) pattern information;
receiving, from the base station, an RRCReconfiguration message including wake-up signal (WUS) configuration information;
identifying whether a PDCCH can be monitored, based on the second message and the RRCReconfiguration message,; and
monitoring the PDCCH based on the identification.

2. The method of claim 1, wherein the capability information of the UE includes an indicator of whether the UE supports a WUS or cell DTX.

3. The method of claim 1, further comprising:
in case that, after receiving a WUS from the base station, an onDuration period corresponding to the WUS overlaps a non-active period of the cell DTX, identifying that the PDCCH cannot be monitored;
stopping reception of any other WUS during the non-active period of the cell DTX based on the identification; and
applying the WUS after the non-active period is ended based on the identification.

4. The method of claim 1, further comprising:
identifying that the PDCCH cannot be monitored, in case that a reception period of a WUS overlaps a non-active period of the cell DTX; and
monitoring the PDCCH during an onDuration period after the non-active period of the cell DTX is ended based on the identification.

5. The method of claim 1, wherein the WUS configuration information includes at least one of information indicating reference signal received power (RSRP) or information indicating a channel state information (CSI) report, and
wherein the method further comprises transmitting an RSRP report or the CSI report to the base station, based on the WUS configuration information.

6. A user equipment (UE) in a wireless communication system, the UE comprising:
at least one transceiver; and
a controller coupled to the at least one transceiver,
wherein the controller is configured to:
transmit, to a base station, a first message including capability information of the UE;
receive, from the base station, a second message including cell discontinuous transmission (DTX) pattern information;
receive, from the base station, an RRCReconfiguration message including wake-up signal (WUS) configuration information;
identify whether a PDCCH can be monitored based on the second message and the RRCReconfiguration message; and
monitor the PDCCH based on the identification.

7. The UE of claim 6, wherein the capability information of the UE includes an indicator of whether the UE supports a WUS or cell DTX.

8. The UE of claim 6, wherein the instructions further cause the UE to:
in case that, after receiving a WUS from the base station, an onDuration period corresponding to the WUS overlaps a non-active period of the cell DTX, identify that the PDCCH cannot be monitored;
stop reception of any other WUS during the non-active period of the cell DTX based on the identification; and
apply the WUS after the non-active period is ended based on the identification.

9. The UE of claim 6, wherein the instructions further cause the UE to:
identify that the PDCCH cannot be monitored, in case that a reception period of a WUS overlaps a non-active period of the cell DTX; and
monitor the PDCCH during an onDuration period after the non-active period of the cell DTX is ended based on the identification.

10. The UE of claim 6, wherein the WUS configuration information includes at least one of information indicating reference signal received power (RSRP) or information indicating a channel state information (CSI) report, and
wherein the controller is further configured to transmit an RSRP report or the CSI report to the base station, based on the WUS configuration information.

11. A method performed by a base station in a wireless communication system, the method comprising:
receiving, from a user equipment (UE), a first message including capability information of the UE;
transmitting, to the UE, a second message including cell discontinuous transmission (DTX) pattern information;
transmitting, to the UE, an RRCReconfiguration message including wake-up signal (WUS) configuration information; and
transmitting a WUS or a physical downlink control channel (PDCCH) corresponding to the WUS,
wherein the second message and the RRCReconfiguration message are used by the UE to identify whether the PDCCH can be monitored.

12. The method of claim 11, wherein the capability information of the UE includes an indicator of whether the UE supports the WUS or cell DTX.

13. The method of claim 11, wherein the WUS configuration information includes at least one of information indicating reference signal received power (RSRP) or information indicating a channel state information (CSI) report, and
wherein the method further comprises receiving an RSRP report or the CSI report from the UE, based on the WUS configuration information.

14. A base station in a wireless communication system, the base station comprising:
at least one transceiver; and
a controller coupled to the at least one transceiver,
wherein the controller is configured to:
receive, from a user equipment (UE), a first message including capability information of the UE,
transmit, to the UE, a second message including cell discontinuous transmission (DTX) pattern information;
transmit, to the UE, an RRCReconfiguration message including wake-up signal (WUS) configuration information; and
transmit a WUS or a physical downlink control channel (PDCCH) corresponding to the WUS,
wherein the second message and the RRCReconfiguration message are used by the UE to identify whether the PDCCH can be monitored.

15. The base station of claim 14, wherein the capability information of the UE includes an indicator of whether the UE supports the WUS or cell DTX.
